# NEW EUROPEAN PATENT SPECIFICATION

(11) **EP 0 094 185 B2**
(45) Date of publication and mention of the opposition decision: **04.09.1996**
(45) Mention of the grant of the patent: 05.07.1989
(21) Application number: 83302456.5
(22) Date of filing: 29.04.1983
(51) Int. Cl.: C08L 83/04, C08K 5/01, C08K 3/10, C09J 7/02

(54) **Use of peelable film-forming organopolysiloxane compositions**
Verwendung von Organopolysiloxanenzusammensetzungen zur Herstellung von abziehbaren Filmen
Emploi de compositions polyorganosiloxaniques dans la préparation de films anti-adhérents

(30) Priority: 06.05.1982 JP 75898/82
(43) Date of publication of application: 16.11.1983
(73) Proprietor: Toray Silicone Company Limited, Chuo-ku Tokyo 103 (JP)
(72) Inventor: Sasaki, Shosaku, Ichihara-shi Chiba Prefecture (JP); Kaiya, Nobuo, Ichihara-shi Chiba Prefecture (JP); Shirahata, Akihiko, Ichihara-shi Chiba Prefecture (JP)
(74) Representative: Dowden, Marina

(56) References cited:
- EP-A- 0 051 384
- EP-A- 0 091 291
- DE-A- 2 654 893
- DE-A- 2 922 295
- DE-A- 3 121 439
- US-A- 3 445 420
- US-A- 3 989 668
- US-A- 4 347 346

## Description

This invention relates to the use of a peelable film-forming organopolysiloxane composition for the preparation of coatings on the surface of sheetlike bare material. The said peelable film-forming organopolysiloxane composition is storage-stable at room temperature and can be rapidly cured at low temperatures after being coated on the surface of a sheetlike base material such as paper, synthetic resin film, fiber or aluminum.

EP-A-91291 describes the incorporation into organopolysiloxane compositions, which react by hydrosilylation to undergo viscosity increase, of an unsaturated hydrocarbon having from 6 to 10 carbon atoms, a terminal acetylenic linkage and an olefinic linkage conjugated therewith in order to improve the pot life and to give a shorter cure time. The resulting compositions are useful in preparing cured siloxanes such as resins, elastomers, gels and foams.

The organopolysiloxane results from 2 components as follows:
(a) an alkenyl group-containing organopolysiloxane component comprising at least one siloxane unit having the formula R¹ ₐR² _{b}SiO_{(4-a-b)/2} wherein R¹ denotes a silicon-bonded alkenyl group having from 2 to 4 carbon atoms, inclusive, R² denotes a silicon-bonded substituted or unsubstituted monovalent hydrocarbon group, *a* has a value of from 1 to 3, *b* has a value of from 0 to 2 and *a* + *b* has a value of from 1 to 3, all values inclusive, any remaining siloxane units in the alkenyl group-containing organopolysiloxane having the formula R² ₓSiO₍₄₋ₓ₎₂ wherein R² is as denoted above and *x* has a value of from 0 to 3, inclusive; and
(b) an organohydrogenpolysiloxane component comprising at least one siloxane unit having the formula H_{c}R³ _{d}SiO_{(4-c-d)/2} wherein R³ denotes a silicon-bonded substituted or unsubstituted monovalent hydrocarbon group, *c* has a value of from 1 to 3, *d* has a value of from 0 to 2 and *a* + *b* has a value of from 1 to 3, all values inclusive, any remaining siloxane units in the organohydrogenpolysiloxane having the formula R³ _{y}SiO(_{4-y)/2} wherein R³ is as denoted above and *y* has a value of from 0 to 3, inclusive.

Component (a) is an alkenyl group-containing organopolysiloxane, which contains at least one siloxane unit having the formula (1),

R¹ ₐR² _{b}SiO_{(4-a-b)/2} (1)

Organopolysiloxane (a) may be composed only of the organosiloxane units expressed by formula (1) or may contain other organosiloxane units having the formula (1a),

R² ₓSiO₍₄₋ₓ₎₂ (1a)

Specific examples of the alkenyl group-containing organopolysiloxanes used are dimethylvinylsiloxy-terminated polydimethylsiloxane, phenylmethylvinylsiloxy-terminated diphenylsiloxy dimethylsiloxy copolymer polysiloxanes and trimethylsiloxy-terminated methylvinylsiloxy dimethylsiloxy copolymer polysiloxanes. However, the applicable alkenyl group-containing organopolysiloxanes are not limited by these examples and can comprise, for example, any combination of two or more of the above-mentioned siloxane units provided that at least one siloxane unit having the formula (1) is included.

It is known that a tacky surface is peelable from a cured film of an addition reaction-curable organopolysiloxane composition which has been coated on the surface of a sheet-like base material such as paper, synthetic resin film, fiber or aluminum. The coated organopolysiloxane composition must be thoroughly cured in order to impart a stable peelability to the surface of the sheetlike base material. When a film composed of an insufficiently cured composition is brought into contact with a tacky substance, the film will exhibit unstable peeling. Peeling will become difficult with time or the uncured organopolysiloxane composition will migrate into the tacky substance and alter its tacky nature. These are the drawbacks of prior art compositions which therefore cannot be used in practical application. The prior art addition reaction-curable organopolysiloxane compositions (Japanese Patent JP-A-46026798 [71-26798|) must be heated at 130 to 150°C for 30 to 60 seconds in order to form an adequately cured film. However, such a high-temperature heat treatment cannot be applied to synthetic resin films such as polyethylene, polypropylene and polyester films or to poorly heat-resistant paper. When the above-mentioned composition is cured at ≤ 100°C, as long as 2 to 4 minutes are required for curing. The above-mentioned composition is therefore not practical from the standpoint of productivity. A peelable film-forming organopolysiloxane composition which can be more rapidly cured at lower temperatures has found acceptance in the peelable-paper industry in order to increase productivity and reduce costs.

### Brief Summary of the Invention

It is an object of the present invention to use a peelable film-forming organopolysiloxane composition which can be stored at room temperature and cured at a higher, but low temperature. It is another object of this invention to use a peelable film-forming organopolysiloxane composition which, after being cured has a stable peelability from tacky materials.

The present invention comprises the use of a film-forming organopolysiloxane composition for the preparation of coatings on the surface of sheet-like base materials, the film forming organopolysiloxane composition being peelable from a tacky substance when cured, and said composition being prepared by mixing components consisting essentially of
(a) 100 parts by weight of an essentially linear organopolysiloxane component having a viscosity of at least 100 mPa.s (100 centipoise) at 25°C and containing at least two silicon-bonded vinyl groups per molecule,
(b) 0.3 to 40 parts by weight of an organohydrogen polysiloxane component having at least 2 silicon-bonded hydrogen atoms per molecule, there being at least a total of 5 silicon-bonded vinyl groups per molecule of component (a) and silicon-bonded hydrogen atoms per molecule of component (b), and characterized by the addition of
(c) a catalytic amount of a platinum-type compound component
(d) 0.01 to 7 parts by weight of an unsaturated hydrocarbon compound component selected from compounds I to VIII having the following formulae:

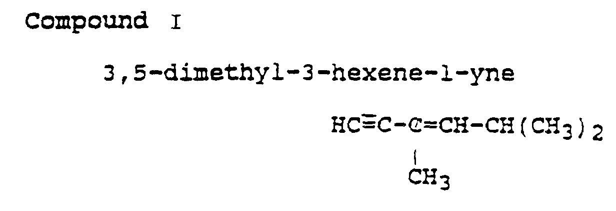

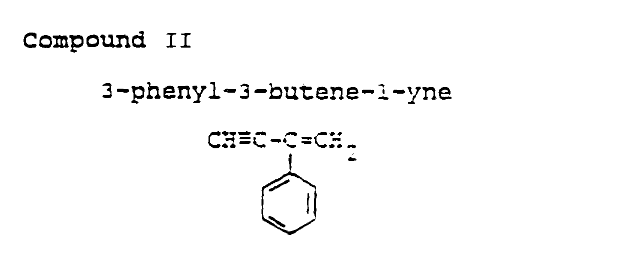

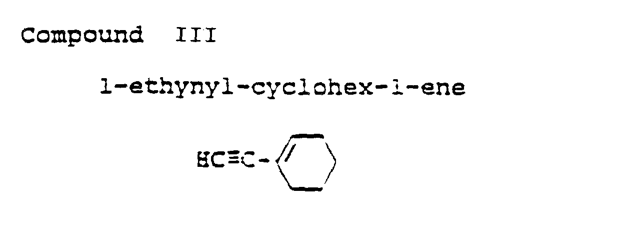

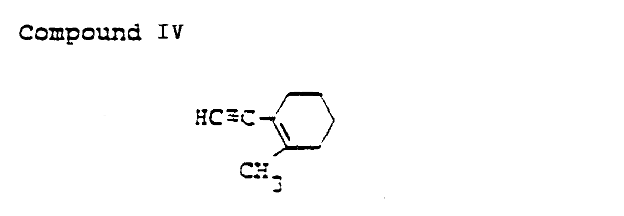

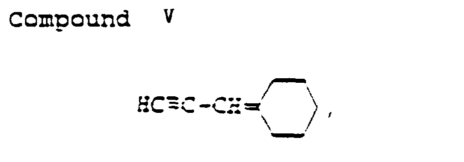

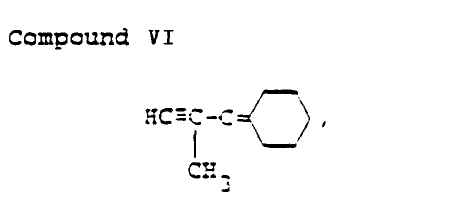

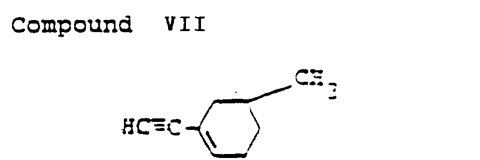

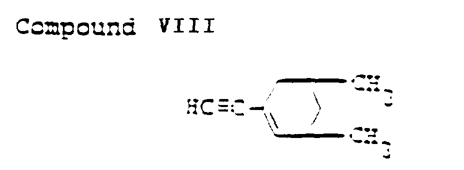

### Detailed Description of the Invention

Component (a) of the compositions used in this invention is an essentially linear organopolysiloxane expressed by the average unit formula

RₐSiO_{(4-a)/2}

wherein *a* is 1.95 to 2.05. R represents a substituted or unsubstituted monovalent hydrocarbon group such as methyl, ethyl, propyl, octyl, vinyl allyl, phenyl or 3,3,3-trifluoropropyl and at least 50 mol% of R is preferably methyl. Component (a) has a viscosity at 25°C ranging from 100 mPa.s to that of the gum and possesses at least 2 silicon-bonded vinyl groups per molecule. "Essentially linear" as defined in this text denotes a straight chain or straight chain branched in part. The molecular chain end may be methyl, vinyl, hydroxyl or phenyl. The location of the vinyl groups is arbitrary and they may be present at the molecular chain ends only, along the molecular chain only or both at the ends and along the molecular chain. Component (a) may be a single type or a mixture of two or more types of essentially linear organopolysiloxanes which differ in vinyl group concentration and/or molecular weight. Preferably component (a) contains only methyl and vinyl organic groups.

Typical examples of essentially linear organopolysiloxanes include, but are not limited to, dimethylvinylsiloxy-terminated polydimethylsiloxane, phenylmethylvinylsiloxy-terminated polydimethylsiloxane and trimethylsiloxy-terminated polydimethylsiloxane-comethylvinylsiloxane.

Component (b) of the compositions used in this invention is an organohydrogenpolysiloxane having at least two SiH groups per molecule. The SiH groups can be located at terminal, internal or both terminal and internal locations of the organohydrogenpolysiloxane. Examples of terminal SiH groups include H(CH₃)₂SiO_{1/2} siloxy units and H(CH₃) (C₆H₅)SiO_{1/2} siloxy units. Examples of internal SiH groups include H(CH₃)SiO_{2/2} siloxy units, H(C₆H₅)SiO_{2/2} siloxy units and HSiO_{3/2} siloxy units.

Typical examples of component(b) include, but are not limited to, methylhydrogenpolysiloxanes such as tetramethyltetrahydrogencyclotetrasiloxane, methylhydrogenpolysiloxane and copolymers of methylhydrogensiloxane and dimethylsiloxane. However, component (b) is not limited to these examples and may contain alkyl groups other than methyl as well as phenyl groups. Its degree of polymerization can range from 2 up to the degree of polymerization obtained by polymerization.

The sum of the number of vinyl groups per molecule of component (a) and the number of SiH groups per molecule of component (b) must be ≥5 in order to obtain the formation of a cured film by the addition reaction of the vinyl groups of component (a) with the SiH groups of component (b). The quantity of component (b) to be added is usually 0.3 to 40 parts by weight per 100 parts by weight of component (a) from a consideration of the formation and peelability of the cured film. Preferably the ratio of the number of SiH groups to SiVinyl groups has a value of from 0.2/1.0 to 5/1, most preferably form 0.75/1.0 to 1.5/1.0.

Component (d) of the compositions used in the present invention is an unsaturated hydrocarbon compound having the formulae I to VIII above.

This component is a necessary component which provides storage stability (addition reaction inhibition) at room temperature and which does not inhibit the addition reaction at a higher temperature of ≤ 100°C, resulting in the rapid curability of this composition at low temperatures (low-temperature curability). That is, the unsaturated hydrocarbon compound itself should comprise a total of 6 to 10 carbon atoms. When the unsaturated hydrocarbon compound contains 5 or fewer carbon atoms, its boiling point is so low that it evaporates rapidly at room temperature and ambient pressure and it cannot be employed in practical applications. On the other hand, when the unsaturated hydrocarbon compound contains more than 10 carbon atoms, it is not highly compatible with the organopolysiloxane with the result that the storage stabilizer undergoes separation or causes uneven curing.

The unsaturated hydrocarbons, component (d), having monovalent hydrocarbon groups are as follows:
3,5-dimethyl-3-hexene-1-yne 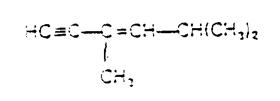 3-phenyl-3-butene-1-yne 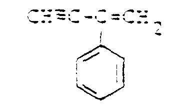 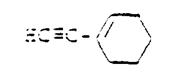 which may be alternatively considered as containing two -CH₂CH₂- groups or one -CH₂- group and one -CH₂CH₂CH₂- group. Other examples include

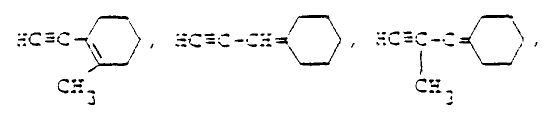

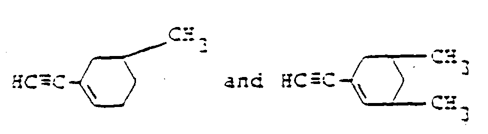

Component (d) must possess a structure in which the terminal ethynyl group is conjugated with a double bond. The composition of this invention must contain the unsaturated hydrocarbon compound with the above-mentioned specific structure which will contribute to a room-temperature storage stability and a low-temperature curability upon heating. Compared with conventional addition reaction-curable silicone potting materials or with an alkynyl alcohol such as 3-methyl-1-butyne-3-ol or 3,5-dimethyl-1-hexyne-3-ol which is a known storage stabilizer for silicone resins, the effect of the above-mentioned unsaturated hydrocarbon compound varies significantly with the curing temperature. In particular, it exhibits an excellent curability at low temperatures. For this reason, when this composition is coated on the surface of a sheetlike base material and subsequently cured by heating, it can be cured at a temperature lower than the temperature employed for conventional compositions at a constant curing time or it can be cured in less time than the time required for conventional compositions at a constant curing temperature.

When the quantity of addition of component (d) is less than 0.01 parts by weight per 100 parts by weight of component (a), the resulting composition exhibits poor room-temperature storage stability with a resulting rapid gel formation after the viscosity begins to increase. On the other hand, when the above-mentioned quantity exceeds 7 parts by weight, the composition will exhibit an excellent room-temperature storage stability with the result that it will not undergo a change in viscosity for a long period of time; however, the curability declines. Due to this, the curing temperature must be increased or the curing time prolonged. For this reason, this composition cannot exhibit advantageous characteristics. Therefore, the quantity of component (d) to be added should be 0.01 to 7 parts by weight per 100 parts by weight of component (a).

The platinum-type compound comprising component (c) is the usual compound which is used for the addition reaction of silicon-bonded vinyl or allyl groups with silicon-bonded hydrogen. Examples are chloroplatinic acid, alcohol-modified chloroplatinic acid, platinum-olefin or platinum-vinylsiloxane complexes. extremely fine platinum powder supported on a carrier such as alumina or silica, palladium catalysts and rhodium catalysts. A platinum-containing compound is preferred. The quantity of addition of platinum compound is arbitrary as long as it is sufficient to cure the composition of this invention; however, from the standpoint of economics it is usually 1 to 1,000 rpm as platinum based on the weight of component (a) in order to obtain a good cured film.

The compositions used in the present invention can further comprise non-essential components which will not adversely affect their curing characteristics and adhesive release characteristics. For example, when a composition of this invention is to be coated on the surface of a sheetlike base material, it may optionally be diluted with an organic solvent which can dissolve the organopolysiloxane. Such an organic solvent includes aromatic hydrocarbons such as benzene, toluene and xylene; aliphatic hydrocarbons such as heptane, hexane, and pentane; halogenated hydrocarbons such as trichloroethylene and perchloroethylene; ethyl acetate and methyl ethyl ketone.

Additional examples of non-essential components that can be added to the compositions of this invention include diorganopolysiloxane which do not contain vinyl groups, fume silica, wet-process silica, siloxane resins composed of R₃SiO_{1/2}, RSiO_{3/2} and SiO_{4/2} siloxane units disclosed in U.S. Patent US-A-4,293,671 and siloxane resins composed of R$\frac{\text{'}}{\text{3}}$SiO_{3/2} and SiO_{4/2} siloxane units in a ratio of from 0.1/ 1.0 to 1.1/1.0 and having a silicon-bonded hydroxyl content of 6% by weight or less, R' being a monovalent hydrocarbon group.

The compositions of this invention can be prepared by any suitable method; however, they are preferably prepared by mixing, until homogeneous, the various components thereof, component (c) being mixed with component (b) in a final step.

The peelable film-forming organopolysiloxane composition used in this invention exhibits good storage stability and can rapidly form an extremely well adhered cured film on the surface of a sheetlike base material such as paper, synthetic resin film, fiber or aluminum at a low temperature of ≤ 100°C. On the other hand it will exhibit an extremely stable peelability against a tacky substance. For this reason, it is effectively applicable to synthetic resin films which are easily deformed at elevated temperatures and poorly heat-resistant paper. Moreover, since it exhibits an excellent coatability on the above-mentioned base materials, a small quantity is adequate. The short curing process at low temperatures significantly increases the productivity.

This invention will be explained using demonstrational examples. "Parts" in the examples denotes "parts by weight". The viscosity was measured at 25°C. The pot life, curability, peel resistance and residual adhesion were measured as follows.

*Pot Life - A* composition (450 ml) produced as specified above is placed in a 600 ml glass bottle equipped with a cooling coil and allowed to stand at 25°C with occasional agitation (usually with a stirrer but in an agitator when the viscosity was high). Samples are collected at prescribed intervals (usually every 24 hours for 1, 2 or 3 days) and the viscosity is immediately measured.

*Curability* - The prescribed quantity of a composition produced as specified above is coated on the surface of a sheetlike base material. The time (sec) required for the formation of a completely cured film in a hot-air circulation oven at a specified temperature is measured. The completion of curing is judged by rubbing the coated surface with a finger in order to determine the point at which the coated surface does not peel off or smudge.

*Peel resistance -* The surface of a sheetlike base material is thinly coated with a composition produced as specified above, and subsequently cured at a specified temperature for a specified period of time. The surface of the resulting cured film is coated with the acrylic pressure-sensitive adhesive Olibain BPS5127 (Toyo Ink Mfg. Co., Ltd.) or with the rubber pressure-sensitive adhesive Olibain BPS2411 (Toyo Ink Mfg. Co., Ltd.) and then heated at 70°C for 2 minutes. Two sheets with this treated film are prepared, adhered to each other and then aged at 25°C under a load of 20 g/cm² for a specified period of time (usually 1, 30 or 60 days or 1 year). The aged sample is cut into 5 cm wide pieces. The adhered sheets are peeled off from each other at an angle of 180° at a tensile rate of 30 cm/min using a tensile tester in order to measure the force (g) required to peel the two sheets.

*Residual adhesion* - A film is formed on the surface of a sheetlike base material by the method used in the peel resistance test and adhered with Nitto Polyester Tape 31B (Nitto Electric Ind. Co., Ltd.). It is heated at 70°C under a load of 20 g/m² for 20 hours. The tape is then peeled off and subsequently adhered to a stainless steel plate. The force (g) required to peel the treated tape from the stainless steel plate at an angle of 180° at a rate of 30 cm/min is then measured. This force (g) is expressed as a percentage of the force (g) required to peel off the fresh standard tape from the stainless steel plate.

### Comparative Example 1

A dimethylsiloxane-methylvinylsiloxane dimethylvinylsilyl-terminated copolymer (100 parts; vinyl group content, 2 mol%; viscosity, 400 mPa.s) was combined with a trimethylsilyl-terminated methylhydrogenpolysiloxane (5 parts; viscosity, 20 mPa.s) and then with 3-methyl-3-pentene-1-yne (1 part) as the storage stabilizer. The resulting mixture was then blended to homogeneity. The mixture was then combined with platinum-vinylsiloxane complex (corresponding to 150 ppm platinum based on the quantity of the above-mentioned dimethylsiloxane-methylvinylsiloxane copolymer) and subsequently thoroughly blended in order to produce the composition used in this invention.

As comparison Example 2 a composition was produced as specified above with exception that 1 part 3-methyl-1-butyne-3-ol was used instead of the above-mentioned storage stabilizer.

The pot life, curability, peel resistance and residual adhesion of these compositions were measured by the above-mentioned methods. The curabilities were measured at 90°C and 100°C using a polyethylene-laminated kraft paper which had been coated with 0.8 g/m² of the composition. Polyethylene-laminated kraft paper was coated with 0.8 g/m² of the composition and then heated at 100°C for 20 seconds in order to examine the peel resistance and residual adhesion. The acrylic pressure-sensitive adhesive Olibain BPS5127 (Toyo Ink. Mfg. Co. Ltd) was used for the peel resistance measurement.

Another comparison example was attempted in which no storage stabilizer was used; however, the composition gelled during the mixing process after the addition of the platinum compound catalyst. It cured so rapidly that it could not be coated on the polyethylene-laminated kraft paper.

The text results for Comparative Example 1 and Comparison Example 2 are reported in Tables 1 and 2.

The pot lives of the composition of comparative Example 1 and Comparison Example 2 were scored as satisfactory because they rarely underwent an increase in viscosity at 25°C in 1 day. However, the composition of this invention efficiently formed a film when heated at 100°C for 20 seconds and its peel resistance and residual adhesion were stable and satisfactory while the composition of Comparison Example 2 was not sufficiently cured upon heating at 100°C for 20 seconds with the result that its peel resistance was unstable and its residual adhesion was very poor so that it could not be used in practical applications.

**TABLE 1**

| Composition | Time required for curing (sec) | |
|---|---|---|
| | 90°C | 100°C |
| Comparative Example 1 | 30 | 15 |
| Comparison Example 2 | 180 | 60 |

**TABLE 2**

| Composition | Peel Resistance (g/5 cm) after | | Residual Adhesion |
|---|---|---|---|
| | 1 day | 60 days | % |
| Comparative Example 1 | 25 | 30 | 96 |
| Comparison Example 2 | 39 | 600 | 46 |

### Example 1

A dimethylsiloxane-methylvinylsiloxane copolymer gum (100 parts; vinyl group content, 1.5 mol%), a trimethylsilyl-terminated methylhydrogenpolysiloxane (3.5 parts; viscosity, 5 mPa.s) and 3,5-dimethyl-3-hexene-1-yne (0.8 parts) as storage stabilizer were dissolved and mixed in toluene (241 parts). Immediately prior to application, the mixture was combined with toluene (1,345 parts) and platinumvinylsiloxane complex (corresponding to 120 ppm platinum based to the above-mentioned copolymer gum) in order to obtain the composition used in this invention.

As Comparison Example 3, 3,5-dimethyl-1-hexene-3-ol (0.8 parts) was used instead of the above mentioned storage stabilizer and, as Comparison Example 4, 3-methyl-1-pentene-3-ol (0.8 parts) was dissolved and mixed by the above-mentioned method.

The composition used in this invention and Comparison Examples 3 and 4 were tested by the methods specified in Comparative Example 1. To measure the curabilities, 0.7 g/m² of the composition was coated on a polyethylene-laminated kraft paper and subsequently cured at 90°C or 100°C. With regard to the peel resistance and residual adhesion, 0.7 g/m² of the composition was coated on a polyethylene-laminated kraft paper and then heated at 100°C for 30 seconds in order to form a film. The pressure-sensitive adhesive employed for the peel resistance test was Olibain BPS2411 (Toyo Ink Mfg. Co. Ltd). The results of these tests are reported in Table 3 and 4.

The pot lives of the compositions of Example 1 and Comparison Examples 3 and 4 were concluded to be excellent because the compositions rarely underwent an increase in viscosity at 25°C in 2 days. However, the composition of Example 1 formed a sufficiently cured film under heating 100°C for 30 seconds to give a satisfactory peel resistance and residual adhesion. The compositions of Comparison Examples 3 and 4 were not adequately cured at 100°C for 30 seconds so that their peel resistance and residual adhesion were very poor with the result that they were inappropriate for practical applications.

**TABLE 3**

| Composition | Time required for curing (sec) | |
|---|---|---|
| | 90°C | 100°C |
| Example 1 | 35 | 20 |
| Comparison Example 3 | 160 | 70 |
| Comparison Example 4 | 190 | 80 |

**TABLE 4**

| Composition | Peel Resistance (g/5 cm) after | | Residual Adhesion |
|---|---|---|---|
| | 1 day | 60 days | % |
| Example 1 | 27 | 25 | 95 |
| Comparison Example 3 | 47 | 680 | 53 |
| Comparison Example 4 | 56 | 710 | 49 |

### Comparative Example 5

A dimethylsiloxane-methylphenylsiloxane-methylvinylsiloxane copolymer gum (100 parts: vinyl group content, 1.5 mol%, phenyl group content, 5 mol%), trimethyl-terminated methylhydrogenpolysiloxane (7 parts: viscosity, 20 mPa.s) and 3-methyl-3-pentene-1-yne ((A1, 0.1 parts; (B), 1 part; (C), 3 pans; (D), 8 parts were dissolved in toluene (241 parts). Immediately prior to application, the composition was combined and blended with toluene (1,345 parts) and with a platinum-vinylsiloxane complex (corresponding to 180 ppm platinum based on the above-mentioned copolymer gum) in order to prepare compositions (A), (B), (C) and (D).

A composition comprising Comparison Example 6 was prepared by the above method with the exception that 3,5-dimethyl-1-hexyne-3-ol (1 part) (to be compared with (B) of this invention) was used instead of the above storage stabilizer.

Compositions (A), (B), (C) and (D) of this invention and Comparison Example 6 were tested by the methods of Example 1. The curability was measured by coating 0.4 g/m² of a composition on a polypropylene film and subsequently curing at 90°C or 100°C. With regard to peel resistance and residual adhesion, 0.4 g/m² of a composition was coated on a polypropylene film and cured by heating at 100°C for 30 seconds in order to form a cured film which was subsequently tested. The pressure-sensitive adhesive used for the peel resistance test was Olibain BPS5127 (Toyo Ink Mfg. Co., Ltd.).

The test results are reported in Tables 5 and 6. Although the (A) exhibited a slight increase in viscosity at 25°C in 1 day with respect to pot life, the others (compositions (B), (C) and (D) and Comparison Example 4) did not undergo any increase in viscosity at 25°C in two days. Composition (D) and the composition of Comparison Example 6 did not adequately cure at 100°C in 30 seconds while compositions (A), (B) and (C) were completely cured under these conditions with the result that they exhibited excellent peel resistance and excellent residual adhesion.

**TABLE 5**

| Composition used | Time required for curing (sec) | |
|---|---|---|
| | 90°C | 100°C |
| (A) | 25 | 15 |
| (B) | 30 | 15 |
| (C) | 40 | 15 |
| (D) | 120 | 50 |
| Comparison Example 6 | 165 | 60 |

**TABLE 6**

| Composition used | Peel Resistance (g/5 cm) after | | Residual Adhesion |
|---|---|---|---|
| | 1 day | 60 days | % |
| (A) | 26 | 27 | 95 |
| (B) | 25 | 25 | 96 |
| (C) | 26 | 28 | 95 |
| (D) | 42 | 189 | 62 |
| Comparison Example 6 | 45 | 283 | 55 |

## Claims

1. The use of a film-forming organopolysiloxane composition for the preparation of coatings on the surface of sheet like base materials, the film-forming organopolysiloxane composition being peelable from a tacky substance when cured, and said composition being prepared by mixing components consisting essentially of
(a) 100 parts by weight of an essentially linear organopolysiloxane component having a viscosity of at least 100 mPa.s (100 centipoise) at 25°C and containing at least two silicon-bonded vinyl groups per molecule,
(b) 0.3 to 40 parts by weight of an organo-hydrogen polysiloxane component having at least 2 silicon-bonded hydrogen atoms per molecule, there being at least a total of 5 silicon-bonded vinyl groups per molecule of component (1) and silicon-bonded hydrogen atoms per molecule of component (2), and characterized by the addition of
(c) a catalytic amount of a platinum-type compound component
(d) 0.01 to 7 parts by weight of an unsaturated hydrocarbon compound component selected from compounds I and VIII of the following formulae:

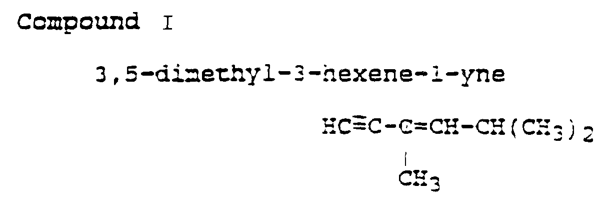

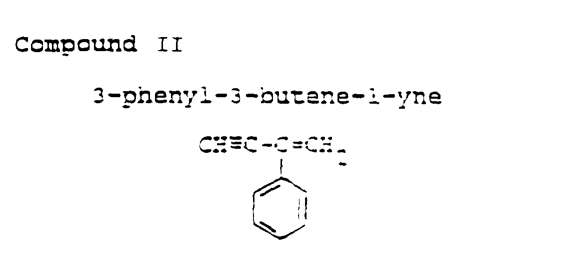

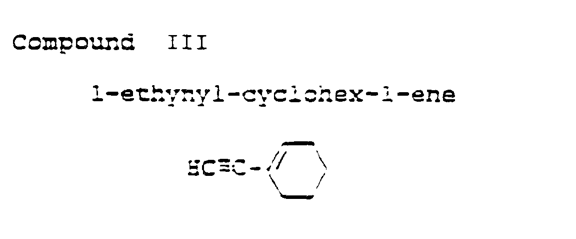

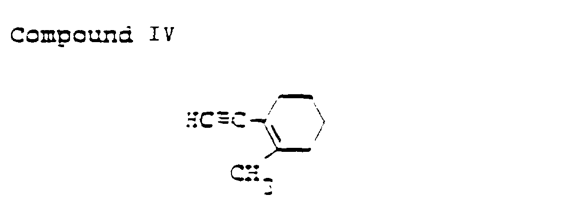

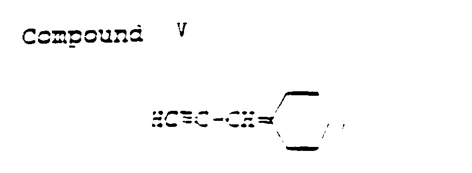

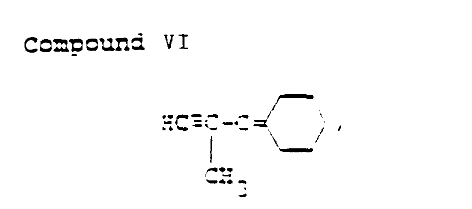

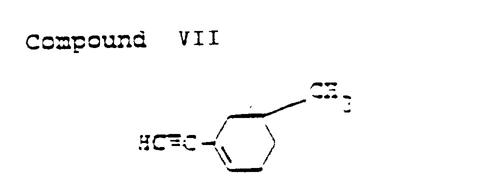

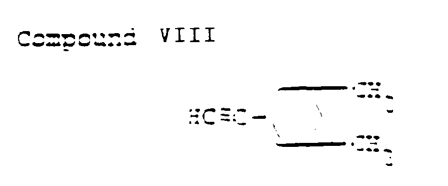

2. The use according to claim 1, wherein the unsaturated hydrocarbon compound component is 1-ethynyl-cyclohex-1-ene.

3. The use according to claim 1, wherein the unsaturated hydrocarbon compound component is 3,5-dimethyl-3-hexene-1-yne.

## Patentansprüche

1. Verwendung einer filmbildenden Organopolysiloxanzusammensetzung zum Herstellen von Beschichtungen auf der Oberfläche von folienartigen Trägermaterialien, wobei die filmbildende Organopolysiloxanzusammensetzung in gehärtetem Zustand von einer klebrigen Substanz abziehbar ist und die Zusammensetzung hergestellt wurde durch Mischen von Bestandteilen, im wesentlichen bestehend aus:
(a) 100 Gewichtsteilen eines im wesentlichen linearen Organopolysiloxanbestandteils mit einer Viskosität bei 25°C von mindestens 100 mPa·s (100 Centipoise), der mindestens zwei an Silicium gebundene Vinylgruppen pro Molekül aufweist,
(b) 0,3 bis 40 Gewichtsteilen eines Organohydrogenpolysiloxanbestandteils mit mindestens zwei an Silicium gebundenen Wasserstoffatomen pro Molekül,
wobei mindestens insgesamt fünf an Silicium gebundene Vinylgruppen pro Molekül von Bestandteil (1) und an Silicium gebundene Wasserstoffatome pro Molekül von Bestandteil (2) vorhanden sind,
**gekennzeichnet durch**
Zugabe von
(c) einer katalytischen Menge eines Platinverbindungsbestandteils und
(d) 0,01 bis 7 Gewichtsteilen eines ungesättigten Kohlenwasserstoffverbindungsbestandteils, ausgewählt aus Verbindungen I bis VIII der folgenden Formeln:

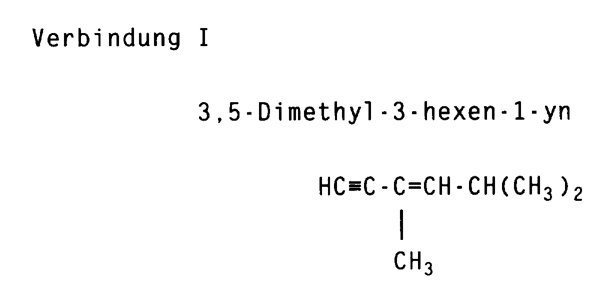

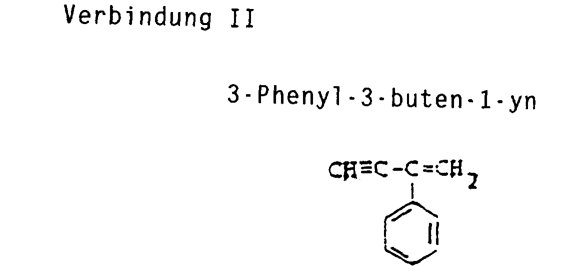

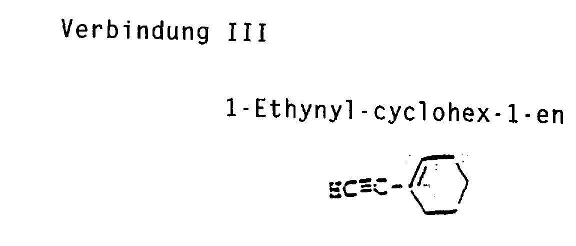

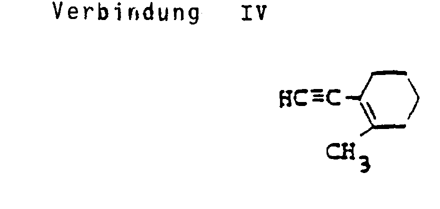

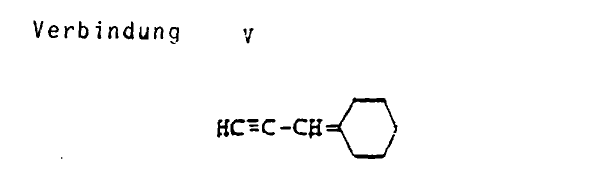

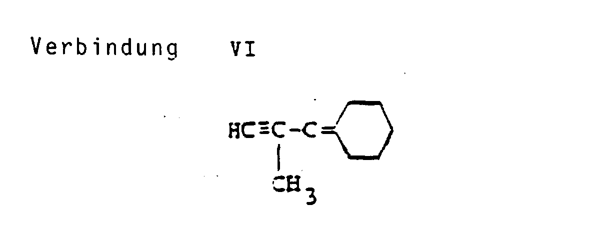

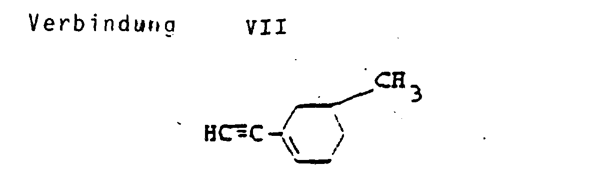

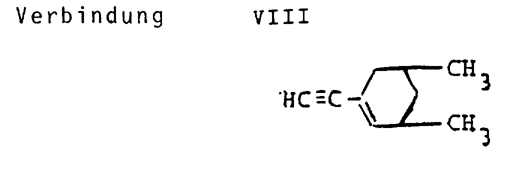

2. Verwendung nach Anspruch 1,
**dadurch gekennzeichnet,**
daß der ungesättigte Kohlenwasserstoffverbindungsbestandteil 1-Ethynyl-cyclohex-1-en ist.

3. Verwendung nach Anspruch 1,
**dadurch gekennzeichnet,**
daß der ungesättigte Kohlenwasserstoffverbindungsbestandteil 3,5-Dimethyl-3-hexen-1-yn ist.

## Revendications

1. L'utilisation d'une composition d'organopolysiloxanes filmogène pour la préparation de revêtement sur la surface de matériaux de base en feuille, la composition d'organopolysiloxanes filmogène étant décollable d'une substance collante une fois qu'elle est durcie, et ladite composition étant préparée en mélangeant des composants essentiellement constitués de
(a) 100 parties en poids d'un composant qui est un organopolysiloxane essentiellement linéaire ayant une viscosité d'au moins 100 mPa.s (100 centipoises) à 25°C et contenant au moins deux groupes vinyle liés au silicium par molécule,
(b) 0,3 à 40 parties en poids d'un composant qui est un organohydrogénopolysiloxane contenant au moins 2 atomes d'hydrogène liés au silicium par molécule, le total de groupes vinyle liés au silicium par molécule de composant (1) et d'atomes d'hydrogène liés au silicium par molécule de composant (2) étant d'au moins 5, et caractérisée par l'addition de
(c) une quantité catalytique d'un composant qui est un composé du type du platine
(d) 0,01 à 7 parties en poids d'un composant qui est un hydrocarbure insaturé choisi parmi les composés I et VIII des formules suivantes :

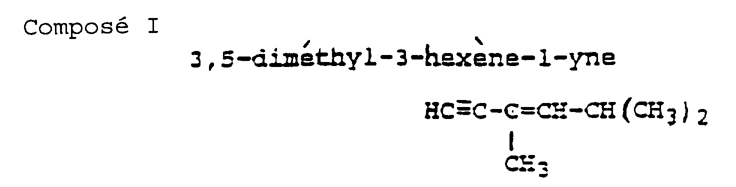

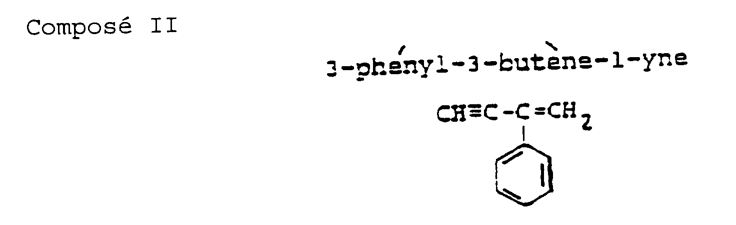

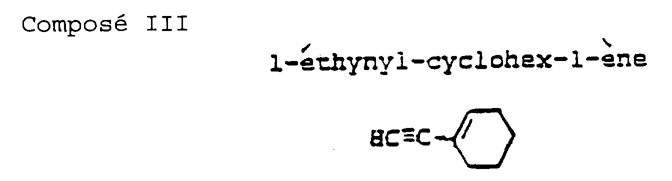

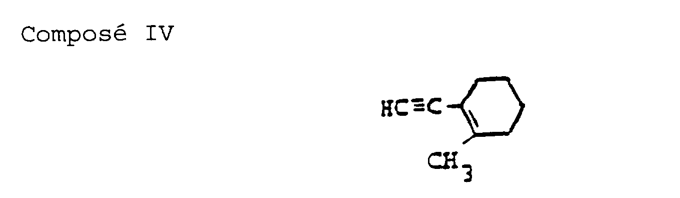

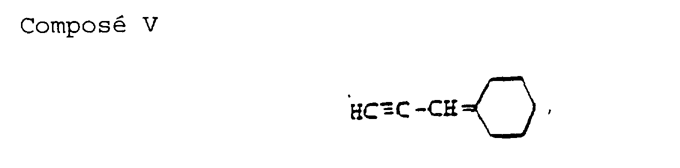

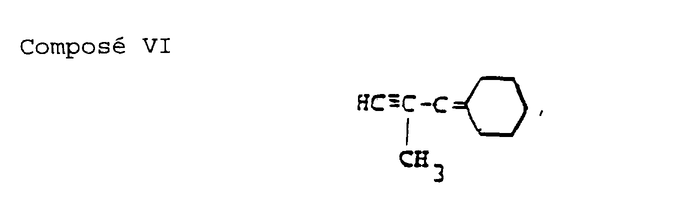

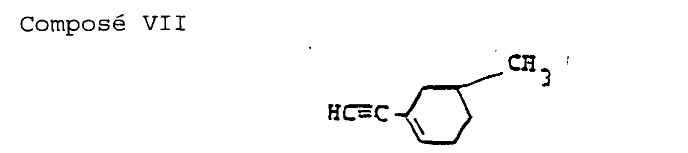

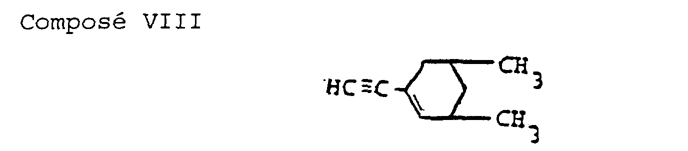

2. L'utilisation selon la revendication 1, dans laquelle le composant hydrocarbure insaturé est le 1-éthynyl-cyclohex-1-ène.

3. L'utilisation selon la revendication 1, dans laquelle le composant hydrocarbure insaturé est le 3,5-diméthyl-3-hexène-1-yne.
